# EUROPEAN PATENT SPECIFICATION

(11) **EP 0 432 813 B1**
(45) Date of publication and mention of the grant of the patent: **29.12.1993**
(21) Application number: 90202939.6
(22) Date of filing: 07.11.1990
(51) Int. Cl.: A47F 5/04, A47B 31/00, A47B 81/04

(54) **Device for storing dish-type containers**
Vorrichtung zum Lagern von geschirrartigen Behältern
Dispositif de stockage de récipients du type vaisselle

(30) Priority: 27.11.1989 NL 8902919
(43) Date of publication of application: 19.06.1991
(73) Proprietor: Nales, Arnoldus Theodorus Bernardus Maria, NL-7396 CA Terwolde (NL)
(72) Inventor: Nales, Arnoldus Theodorus Bernardus Maria, NL-7396 CA Terwolde (NL)
(74) Representative: Morel, Christiaan F., Ir.Dr.

(56) References cited:
- DE-U- 8 632 017
- FR-A- 2 241 953
- GB-A- 340 490

## Description

The invention relates to a device for storing dish-type containers such as plates, dishes or serving trays, containing a product comprising a vertical column which has a base support at the bottom end thereof, which column having a plurality of supporting elements disposed at equal intervals above one another for the accomodation of the containers in horizontal position, said column being triangular or rectangular in cross-section to define a plurality of sides thereon and said supporting elements placed on each side thereof at equal intervals above one another,The invention relates in particular to a device in which can be fixed a great number of plates with food ready to serve, such as plates with a finished product or a semi-finished product in a refrigerator or freezer. It is vitally important that a great number of plates could be stored on a small area, so that a great space can be saved in for example the kitchen of restaurants.

Hitherto, mobile racks in which the plates or serving trays were placed were used for this purpose. These racks with serving trays occupy a large amount of space even when they are not in use.

From the British patent specification 340.490 is known a revolving counter stands for plates and the like comprising a vertical support provided with a base and in which support are fitted a plurality of springclips. Between these clips could be placed a plate, however the plates ought to be placed rather well otherwise they will tumble and also it is rather difficult to take a dish out of the support without bringing in disequilibrium the other dishes.

From the French patent 2.241.953 it is known a device which comprises a column in which column are placed a number of projections and inbetween three projections could be held a glass plate.

The object of the invention is to provide a device which meets the above mentioned requirements and especially that a plate is well fixed even if food is placed on the plate.

These objects are achieved according to the invention that each supporting element comprises two pin-projections lying in line with each other in the horizontal direction, and a third pin-shaped projection which is longer than the other two projections and lie centrally below the other two projections at a predetermined distance below the line connecting the other two projections to each other.

In this way plates or dishes can engage with an edge between the projections, the bottom projection always supporting the bottom side of the plate or the dish, and the two top projections holding the plate in balance.

In an expedient embodiment of the invention the distance from the bottom projection to the connecting line between the two top projections is adjustable. This design makes it possible to adapt the device to the depth of the plates or dishes in question and to the different dimensions and shapes thereof.

The invention will be explained in greater detail with reference to the drawing which by way of example shows an embodiment of the invention, in which:
Figure 1 shows schematically a side view of the device according to the invention;
Figure 2 shows schematically on a larger scale a supporting element of the device according to Figure 1 with a plate accommodated therein;
Figure 3 shows a partial horizontal section of the device according to Figure 1;
Figures 4a and 4b show a top and a side view respectively of a fixing element for fixing the column to the base support;
Figure 5 shows a vertical section of the top part of the column, in which the mechanism for adjusting the supporting elements can be seen.

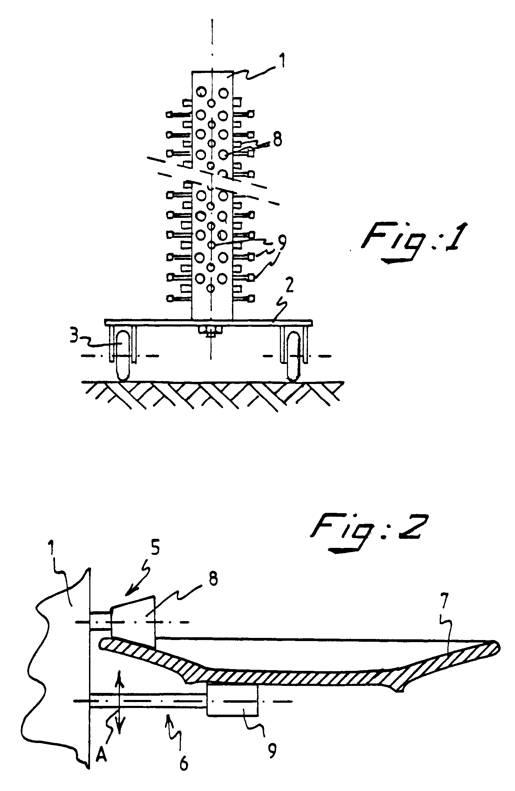

As can be seen from Figure 1, the device comprises a column 1 which has a base plate 2 at the bottom side. The base plate has a square surface, and in each of the corners is provided with a wheel 3 by means of which the device is mobile. Two of the wheels are preferably castors, as a result of which the device can be moved easily.

In the embodiment shown, the column 1 has an essentially square cross-section, provision being made for supporting elements 4 at equal intervals above one another at each of the sides of the column, which supporting elements will be described in detail below, and serve to accommodate plates or dishes.

Figure 2 shows schematically how a plate is suspended horizontally in a supporting element 4. As can be seen in Figures 1 and 2, each supporting element comprises two pin-shaped projections 5 lying in line with each other in the horizontal direction, and a third pin-shaped projection 6 lying centrally between the two projections 5 at a distance below the line connecting the projections to each other. A plate 7, which can contain a finished product or semi-finished product, is inserted with its edge below the two projections 5 and rests with its lower side on the projection 6. For this purpose, the projection 6 is considerably longer than the projections 5. In order to ensure a stable suspension of the plate, the upper projections 5 are provided at their free ends with rubber caps 8 which are the shape of a truncated cone and are fitted in such a way that the large base surface faces outwards. The slightly upward-running edge of the plate or the dish thus lies well against the conical surface of the cap 8. The lower projection 6 is also provided at its free end with a rubber cap 9, but this cap is a cylindrical shape. In order to make the device suitable for plates and dishes of different dimensions and shapes, the lower projection 6 can be moved in the vertical direction relative to the upper projections 5, as shown by the double arrow A in Figure 2.

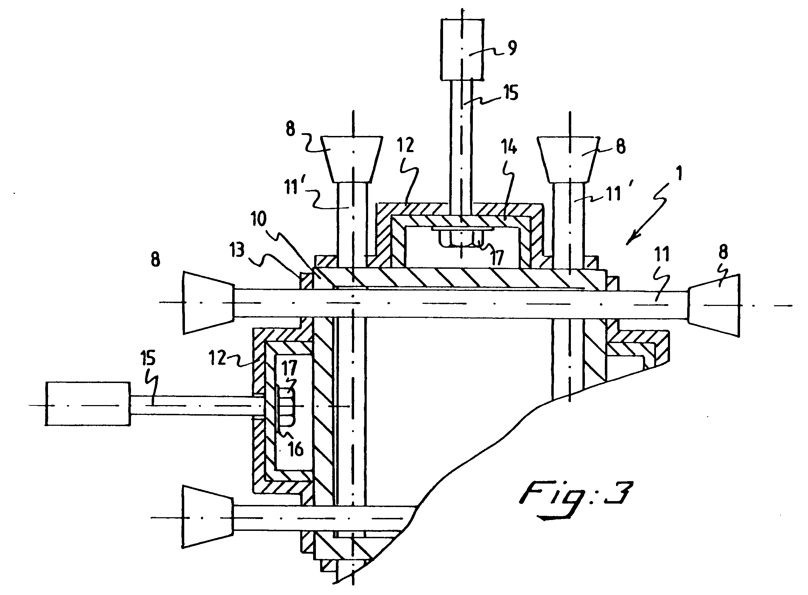

Figure 3 shows a vertical section of the column 1 containing the supporting elements 4. The column 1 is essentially formed by a tube 10 with square cross-section. Through this tube project horizontal pins 11, which are fitted in such a way that two pins always lie parallel to each other in the same horizontal plane, and extend at right angles to two side surfaces of the tube 10 lying opposite each other. The pins 11, 11' lying in the same horizontal plane lie as far away from each other as possible, in other words near the corner points of the tube. Viewed in the lengthwise direction of the tube, two pins 11 thus always lie spaced apart through two opposite side faces of the tube 10, while two pins 11' always run in the same way staggered over half the distance through the other side faces of the tube 10, in the present case thus intersecting the pins 11 at right angles. The pins 11 and 11' are fixed in the tube 10 in a suitable manner (not shown), for example by gluing. Both ends of each pin are provided with the rubber cap 8.

Each of the side surfaces of the tube 10 is provided with a guide section 12 extending over virtually the entire length of the tube 10. This guide section is U-shaped in cross-section with outward-flanged end flanges 13, by means of which the sections are fixed to the tube. A bar 14 is fitted inside the space enclosed by the guide section, which bar 14 is guided by the guide section so that it slides in the lengthwise direction. The bar 14 bears at equal intervals a number of pins 15 projecting through a longitudinal aperture 16 provided in the guide section. In the embodiment shown in Figure 3 the pins 16 are fixed to the bar 14 by means of a bolt 17. The distance between the pins 15 corresponds to the vertical distance between every two pins 11 and 11'. Each pin 15 with the two pins 11, 11' lying directly above it forms a supporting element 4, for which purpose each pin 15 is provided with a rubber cap 9 at the free end. The distance between the pin 15 and the pins 11, 11' lying above it can be altered by means of the slidable bar 14, in order to adapt the supporting element to the plates or dishes which are to be stored.

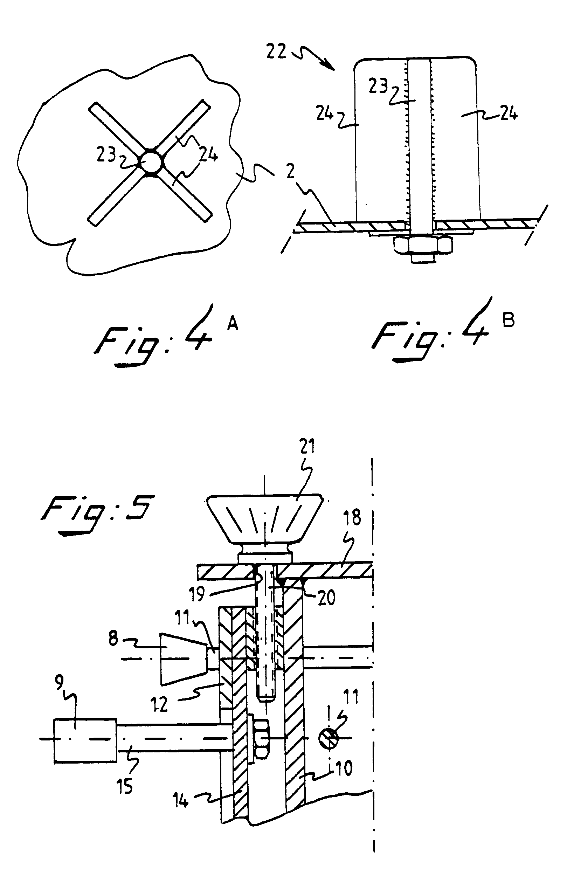

Figure 5 shows schematically the way in which the adjustment of the supporting elements can be carried out. For this, a cover plate 18 which projects beyond the tube at the sides and at least overlaps the guide section 12 is fitted on the top side of the tube 10. In line with the bar 14, the cover plate 18 is provided with an aperture 19, through which an externally threaded rod 20 is inserted. The rod 20 is provided with a turning knob 21 at the end lying above the cover plate, and at the other end is connected by a threaded connection to the bar 14. Turning the knob 21 by hand will thus result in a vertical displacement of the bar 14 in the guide section 12.

Finally, Figures 4a and 4b show the fixing element 22, by means of which the column 1 can be fixed to the base plate. The fixing element 22 comprises a rod 23 to which plates 24 are welded diametrically, which plates lie at right angles to each other. The rod projects beyond the plates 24 at one end, and this projecting part is threaded. In order to fix the fixing element to the base plate 2, the threaded end of the rod 23 is inserted into an aperture provided in the base plate and fixed by means of a nut 25. The column 1 is placed over the fixing element, the fixing element engaging in a tight fit in the internal cavity of the tube 10. The fixing element, and thus the column 1, can be fixed at any desired place on the base plate through providing a number of holes in the base plate.

This device can also be used very well with, for example, serving trays, for which purpose the column can then be fixed to the side of the base plate 2. For this, the base plate is provided with a second fixing element on which the column can be fixed. This means that a number of serving trays can then be placed at one side of the column, provided with, for example, cups and saucers which are to be served with, for example, coffee.

Other possibilities with the device according to the invention are to anchor the column firmly to the base plate by means of an L-shaped bar which is fixed to the side of the base plate, and one leg of which runs parallel to the column 1, while the other leg is fixed to the top side of the column. This L-shaped bar can then be used for fitting a casing in such a way that it pivots about the column, so that a closed trolley is produced. Refrigeration, for example at the top side, and/or a heating unit, for example at the bottom side, can then be provided. Such a trolley can then be used independently of a refrigerator or an oven.

Other accessories can also be supplied in a simple manner, for example a support which can be placed on a number of the supporting elements, and on which, for example, standardized cutlery trays can be placed.

## Claims

1. Device for storing dish-type containers such as plates, dishes or serving trays, containing a product comprising a vertical column (1) which has a base support (2) at the bottom end thereof, which column (1) having a plurality of supporting elements (8, 9) disposed at equal intervals above one another for the accomodation of the containers (7) in horizontal position, said column (1) being triangular or rectangular in cross-section to define a plurality of sides thereon and said supporting elements (8, 9) placed on each side thereof at equal intervals above one another, characterized in that each supporting element (8, 9) comprises two pin-projections (11, 11') lying in line with each other in the horizontal direction, and a third pin-shaped projection (15) which is longer than the other two projections (11, 11') and lies centrally below the other two projections (11, 11') at a predetermined distance below the line connecting the other two projections to each other.

2. Device according to claim 1, characterized in that the distance from the bottom projection (15) to the connection line between the two upper projections (11, 11') is adjustable.

3. Device according to one of the claims 1 or 2, characterized in that each supporting element (8, 9) comprises two pin-shaped projections (11, 11') lying in line with each other in the horizontal direction, and a third pin-shaped projection (15) which is longer than the other two projections (11, 11') and lies centrally between the other two projections (11, 11') at a certain distance from the line connecting the other two projections to each other.

4. Device according to one of the claims 1, 2 or 3, characterized in that the two upper pin-shaped projections (5, 11, 11') are provided at their free ends with an end part (8) widening outwards.

5. Device according to one of the claims 1, 2, 3 of 4, characterized in that the base support (2) for the column (1) comprises a flat bottom plate provided with wheels (3), which plate is provided with one or more fixing elements (22) for detachable accommodation of the column (1).

6. Device according to one of the claims 1 - 5, characterized in that the third pin-shaped projections (6, 15) of all supporting elements (8,9) always provided at one side of the column (1) are adjustable in common.

7. Device according to one of the claims 1 - 6, characterized in that the bottom plate is square, and two fixing elements (22) are present, one of which lies in the centre, while the other is situated near the side edge of the bottom plate.

8. Device according to one of the claims 1 - 7, characterized in that the pin-shaped projections (5, 11, 11') of each supporting element (8,9) are provided at their free ends with a cap (9) made of an elastomer.

9. Device according to one of the claims 1 - 8, characterized in that the column (1) is made of a hollow tube (10), and the fixing elements (22) are formed by raised elements (22, 23) which engage in the internal cavity of the tube (10).

## Patentansprüche

1. Einrichtung zum Lagern von schalenartigen Behältern wie Teller, Schüsseln oder Servierschalen, die ein Erzeugnis enthält, das eine senkrechte Säule (1) umfaßt, die am unteren Ende ein Basisauflager (2) aufweist, wobei die Säule (1) eine Vielzahl von Stützelementen (8,9) hat, die mit gleichen Abständen übereinander für die Unterbringung von Behältern (7) in waagerechter Lage angeordnet sind, wobei die erwähnte Säule (1) dreieckig oder rechtwinklig im Querschnitt ist, um mehrere Seiten daran genau abzugrenzen, wobei die erwähnten Elemente (8,9) an jeder Seite davon mit gleichen Abständen übereinander plaziert sind, dadurch gekennzeichnet, daß jedes Stützelement (8,9) zwei Stiftvorsprünge (11,11'), die in waagerechter Richtung miteinander in einer Linie liegen und einen dritten stiftförmigen Vorsprung (15) enthält, der länger als die beiden Vorsprünge (11,11') ist und mittig unter den anderen beiden Vorsprüngen (11,11') mit einem vorbestimmten Abstand unter der Linie liegt, welche die anderen beiden Vorsprünge miteinander verbindet.

2. Einrichtung nach Anspruch 1, dadurch gekennzeichnet, daß der Abstand des unteren Vorsprungs (15) zu der Verbindungsliniezwischen den beiden oberen Vorsprüngen (11,11') einstellbar ist.

3. Einrichtung nach einem der Ansprüche 1 oder 2, dadurch gekennzeichnet, daß jedes Stützelement (8,9) zwei Stiftvorsprünge (11,11'), die in waagerechter Richtung auf einer gemeinsamen Linie liegen und einen dritten stiftförmigen Vorsprung (15) aufweist, der länger als die beiden anderen Vorsprünge (11,11') ist und mittig zwischen den beiden anderen Vorsprüngen (11,11') mit einem bestimmten Abstand von der Linie, welche die anderen beiden Vorsprünge miteinander verbindet, liegt.

4. Einrichtung nach einem der Ansprüche 1, 2 oder 3, dadurch gekennzeichnet, daß die beiden oberen stiftförmigen Vorsprünge (5,11,11') an ihren freien Enden mit einem Endteil (8) versehen sind, das sich nach außen hin weitet.

5. Einrichtung nach einem der Ansprüche 1, 2, 3 oder 4, dadurch gekennzeichnet, daß das Basisauflager (2) für die Säule (1) eine flache Bodenplatte umfaßt, die mit Rädern (3) versehen ist, wobei die Platte mit einem oder mehreren Feststellelementen (22) für die lösbare Aufnahme der Säule (1) versehen ist.

6. Einrichtung nach einem der Ansprüche 1 bis 5, dadurch gekennzeichnet, daß die dritten stiftförmigen Vorsprünge (6,15) aller Stützelemente (8,9) stets an einer Seite der Säule angebracht, gemeinsam einstellbar sind.

7. Einrichtung nach einem der Ansprüche 1 bis 6, dadurch gekennzeichnet, daß die untere Platte quadratisch ist und zwei Feststellelemente (22) vorhanden sind, von denen eins in der Mitte liegt, während das andere in der Nähe der Seitenkante der unteren Platte liegt.

8. Einrichtung nach einem der Ansprüche 1 bis 7, dadurch gekennzeichnet, daß die stiftförmigen Vorsprünge (5,11,11') eines jeden Stützelements (8,9) an ihren freien Enden mit einer Kappe (9) aus einem Elastomer versehen sind.

9. Einrichtung nach einem der Ansprüche 1 bis 8, dadurch gekennzeichnet, daß die Säule (1) aus einem Hohlrohr (10) gefertigt ist und die Feststellelemente (22), welche in den inneren Hohlraum des Rohres (10) eingreifen, durch erhöhte Elemente (22,23) gebildet werden.

## Revendications

1. Appareil de stockage de récipients analogues à des plats, tels que des assiettes, des plats ou des plateaux de service, contenant un produit, comprenant une colonne verticale (1) qui a un support (2) de base à son extrémité inférieure, la colonne (1) ayant plusieurs éléments de support (8, 9) placés à intervalles réguliers les uns au-dessus des autres pour le logement des récipients (7) en position horizontale, la colonne (1) ayant une section triangulaire ou rectangulaire afin qu'elle délimite plusieurs côtés et les éléments de support (8, 9) étant placés de chaque côté à intervalles réguliers les uns au-dessus des autres, caractérisé en ce que chaque élément de support (8, 9) comprend deux saillies (11, 11') en forme de broches alignées les unes sur les autres en direction horizontale, et une troisième saillie (15) en forme de broche qui est plus longue que les deux autres saillies (11, 11') et qui est placée au centre au-dessous des deux autres saillies (11, 11') à une distance prédéterminée sous la droite reliant les deux autres saillies l'une à l'autre.

2. Appareil selon la revendication 1, caractérisé en ce que la distance comprise entre la saillie inférieure (15) et la droite de raccordement des deux saillies supérieures (11, 11') est ajustable.

3. Appareil selon l'une des revendications 1 et 2, caractérisé en ce que chaque élément de support (8, 9) comporte deux saillies (11, 11') en forme de broche qui sont alignées en direction horizontale, et une troisième saillie (15) en forme de broche qui est plus longue que les deux autres saillies (11, 11') et qui est placée entre les deux autres saillies (11, 11') à une certaine distance de la droite reliant les deux autres saillies l'une à l'autre.

4. Appareil selon l'une des revendications 1, 2 et 3, caractérisé en ce que les deux saillies supérieures (5, 11, 11') en forme de broche comportent, à leur extrémité libre, une partie (8) d'extrémité qui s'élargit vers l'extérieur.

5. Appareil selon l'une des revendications 1, 2, 3 et 4, caractérisé en ce que le support (2) de la base de la colonne (1) comprend une plaque inférieure plate ayant des roues (3), la plaque ayant un ou plusieurs éléments de fixation (22) permettant le logement temporaire de la colonne (1).

6. Appareil selon l'une des revendications 1 à 5, caractérisé en ce que les troisièmes saillies (6, 15) en forme de broche de tous les éléments de support (8, 9) qui sont toujours placés d'un côté de la colonne (1) sont ajustables en commun.

7. Appareil selon l'une des revendications 1 à 6, caractérisé en ce que la plaque inférieure est carrée, les deux éléments de fixation (22) sont présents, l'un d'eux se trouvant au centre et l'autre étant placé près du bord latéral de la plaque inférieure.

8. Appareil selon l'une des revendications 1 à 7, caractérisé en ce que les saillies (5, 11, 11') en forme de broche de chaque élément de support (8, 9) comportent, à leur extrémité libre, un capuchon (9) formé d'un élastomère.

9. Appareil selon l'une des revendications 1 à 8, caractérisé en ce que la colonne (1) est formée d'un tube (10), et les éléments de fixation (22) sont formés par des éléments en saillie (22, 23) qui pénètrent dans la cavité du tube (10).
